# EUROPEAN PATENT APPLICATION

(11) **EP 1 916 785 A1**
(43) Date of publication of application: **30.04.2008**
(21) Application number: 07254226.9
(22) Date of filing: 24.10.2007
(51) Int. Cl.: H04B 10/17, G02F 1/35

(54) **Systems and methods for all-optical signal regeneration based on free space optics**

(30) Priority: 26.10.2006 US 589276
(71) Applicant: Kailight Photonics, Inc., Dallas, TX 75204 (US)
(72) Inventor: Tsadka, Sagie, Emke Soreq (IL); Narkiss, Niv, Moaz-Aviv Tel-Aviv (IL); Chayet, Haim, Ness-Ziona (IL); Ben-Ezra, Shalva, Rehovot (IL); Granot, Er'el, Herzliya (IL); Zaibel, Reuven, Gan Yavne (IL); Sher, Arieh, Rehovot (IL); Tzadok, Shai, Petach Tikva (IL); Shachar, Nir, Ramat-Gan (IL)
(74) Representative: Jackson, Richard Eric

(57) **Abstract**

System and methods for all-optical signal regeneration based on free space optics are described. In one exemplary embodiment, a method for regenerating an optical signal comprises counter-propagating an input signal and a regenerating signal within an all-optical signal regenerator based on free space optics, where the all-optical signal regenerator based on free space optics comprises a Sagnac loop interferometer, and extracting a regenerated output signal from the Sagnac loop interferometer. In another exemplary embodiment, an all-optical signal regenerator based on free space optics comprises a Sagnac loop interferometer, an optical signal input path coupled to a semiconductor optical amplifier of the Sagnac loop interferometer, a regenerating optical signal path coupled to the semiconductor optical amplifier of the Sagnac loop interferometer, and a regenerated optical output path coupled to the Sagnac loop interferometer.

## Description

### TECHNICAL FIELD

The present invention is directed generally to signal processing and, more particularly, to systems and methods for all-optical signal regeneration based on free space optics.

### BACKGROUND OF THE INVENTION

In communication systems, signals are often transmitted over very long distances. Transmission over such long distances causes signals to become degraded, for example, by attenuation, interference, and other impairments. Accordingly, some systems use signal repeaters or regenerators to receive a degraded signal and restore its original shape and amplitude.

Prior art fiber optics communication systems have used electrical signal repeaters that receive the light signal from the optical transmission medium, transform that optical signal into an electric signal, restore the electrical signal's shape and amplitude, and then transform the electrical signal back to light for transmission over another optical medium. This process, also called regeneration, can be further complemented by the conversion of the original optical wavelength to another optical wavelength.

Advances in fiber optics technology have allowed for the development of all-optical wavelength conversion, which performs the conversion without changing the light signal to an electric signal. However, the inventors hereof have recognized that prior art all-optical converters typically suffer from the disadvantages of using optical fibers to couple internal components. For example, optical fibers are susceptible to environmental changes, including temperature and pressure variations. Moreover, management and alignment of optical fibers require large workspaces, thus creating serious constraints with respect to the footprint (size) of the device. Furthermore, long optical fibers may induce chromatic and polarization dispersion to the converted signal, thus increasing the final cost of the optical system.

### BRIEF SUMMARY OF THE INVENTION

In one exemplary embodiment of the present invention, a method for regenerating an optical signal comprises counter-propagating an input signal and a regenerating signal within an all-optical signal regenerator based on free space optics, where the all-optical signal regenerator based on free space optics comprises a Sagnac loop interferometer, and extracting a regenerated output signal from the Sagnac loop interferometer. In another exemplary embodiment of the present invention, an all-optical signal regenerator based on free space optics comprises a Sagnac loop interferometer, an optical signal input path coupled to a semiconductor optical amplifier of the Sagnac loop interferometer, a regenerating optical signal path coupled to the semiconductor optical amplifier of the Sagnac loop interferometer, and a regenerated optical output path coupled to the Sagnac loop interferometer.

It is an object of the present invention to provide a device and method for an all-optical signal regenerator based on free space optics (FSO). FSO, also called free-space photonics, refers to the transmission and manipulation of light beams through free space to deliver high-speed, broadband communications. By using FSO and eliminating or reducing the use of optical fibers, embodiments of the present invention provide an optical signal processing device that is robust to vibrations, temperature, and pressure variation. Furthermore, the use of an FSO-based Sagnac loop greatly reduces or eliminates sensitivity to phase variations, and yield a robust interferometer as against thermal fluctuations without affecting polarization. Certain embodiments of the present invention also permit the miniaturization of an optical signal regenerator device due to the use of small free space components rather than long optical fiber spans.

It is a further object of the present invention to reduce the final cost of optical regeneration devices by using unpackaged components with significantly lower cost than their optical fiber-based counterparts. It is yet another object of the present invention to provide a regeneration device and method that avoids chromatic dispersion to the converted signal and that can support any wavelength.

The foregoing has outlined rather broadly certain features and technical advantages of the present invention so that the detailed description that follows may be better understood. Additional features and advantages are described hereinafter. As a person of ordinary skill in the art will readily recognize in light of this disclosure, specific embodiments disclosed herein may be utilized as a basis for modifying or designing other structures for carrying out the same purposes of the present invention. Such equivalent constructions do not depart from the spirit and scope of the invention as set forth in the appended claims. Several inventive features described herein will be better understood from the following description when considered in connection with the accompanying figures. It is to be expressly understood, however, the figures are provided for the purpose of illustration and description only, and are not intended to limit the present invention.

### BRIEF DESCRIPTION OF THE DRAWINGS

For a more complete understanding of the present invention, reference is now made to the following drawings, in which:

FIGURE 1 is a block diagram of an all-optical signal regenerator based on free space optics according to one embodiment of the present invention;

FIGURE 2 is a block diagram of another all-optical signal regenerator based on free space optics according to one embodiment of the present invention;

FIGURE 3 is a block diagram of an all-optical signal regenerator based on free space optics with an integrated continuous wave laser according to one embodiment of the present invention;

FIGURE 4 is a block diagram of an all-optical signal regenerator based on free space optics operating in regeneration mode according to one embodiment of the present invention;

FIGURE 5 is a block diagram of an all-optical signal regenerator based on free space optics with an integrated multi-mode interference component according to one embodiment of the present invention;

FIGURE 6 is a block diagram of a double multi-mode interference component integrated with a semiconductor optical amplifier according to one embodiment of the present invention; and

FIGURE 7 is a block diagram of another all-optical signal regenerator based on free space optics with an integrated multi-mode interference component according to one embodiment of the present invention.

### DETAILED DESCRIPTION OF THE INVENTION

In the following description, reference is made to the accompanying drawings that form a part hereof, and in which exemplary embodiments of the invention may be practiced by way of illustration. These embodiments are described in sufficient detail to enable a person of ordinary skill in the art to practice the invention, and it is to be understood that other embodiments may be utilized, and that changes may be made, without departing from the spirit of the present invention. The following description is, therefore, not to be taken in a limited sense, and the scope of the present invention is defined only by the appended claims.

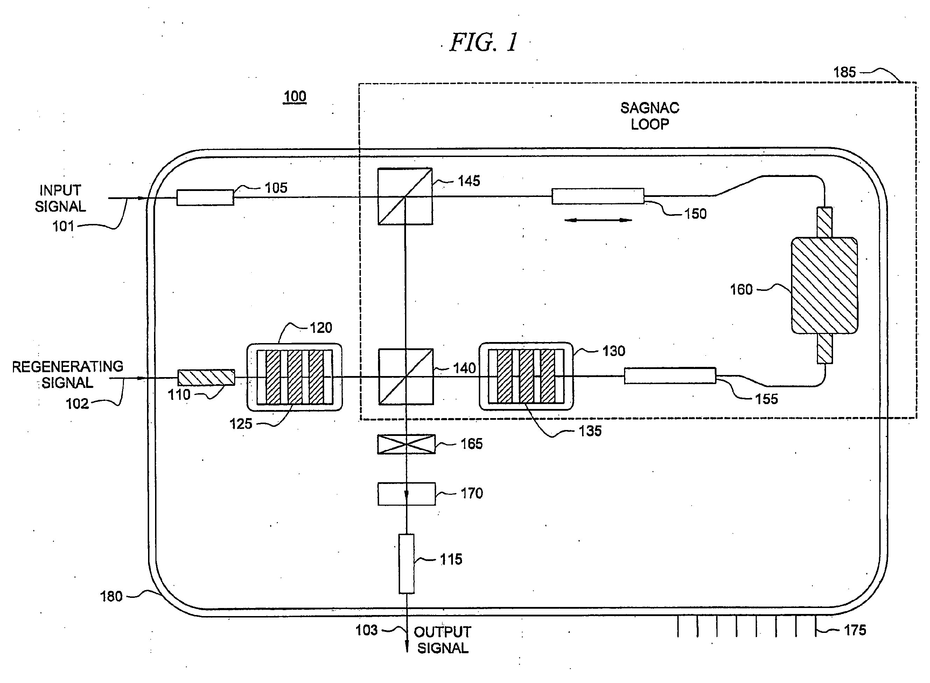

Turning now to FIGURE 1, all-optical signal regenerator 100 based on free space optics (FSO) is depicted, according to an exemplary embodiment of the present invention. Signal input single-mode optical fiber (SMF) and collimator 105 are coupled to non-polarizing beam combiner 145. Non-polarizing beam combiner 145 is coupled to non-polarizing beam splitter 140. Non-polarizing beam combiner 145 is also coupled to semiconductor optical amplifier (SOA) 160 through first SOA arm 150. SOA 160 is coupled to internal polarization controller 135 through second SOA arm 155. In one particular embodiment, internal polarization controller 135 may comprise an internal thermoelectric cooler (TEC) and thermistor 130. In most applications that do not require temperature control, however, the use of a TEC is not required. Internal polarization controller 135 is coupled to non-polarizing beam splitter 140. Regenerating signal polarization maintaining (PM) fiber and collimator 110 are coupled to external polarization controller 125. In one embodiment, external polarization controller 125 comprises external TEC and thermistor 120. External polarization controller 125 is coupled to non-polarizing beam splitter 140. Non-polarizing beam splitter 140 is coupled to polarizer 165, which is coupled to output SMF fiber and collimator 115 through free space isolator 170. Regenerator 100 may be enclosed by a sealed package 180, and includes input/output pins 175 for electrical connections.

In this embodiment, elements 105, 145, and 150 define a signal input optical path, whereas elements 110, 120, 125, 140, 130, 135, and 155 define a regenerating signal optical path, and elements 165, 170, and 115 define a regenerated output optical path. In addition, a combination of elements 145, 150, 160, 155, 135, and 140 create Sagnac loop interferometer (Sagnac loop) 185.

In operation, signal input SMF and collimator 105 introduce input optical signal 101 into Sagnac loop 185 to create cross-gain modulation (XGM), cross phase modulation (XPM), and/or cross polarization modulation (XPP) within Sagnac loop 185. Meanwhile, regenerating signal input PM fiber and collimator 110 counter-propagate regenerating signal 102 into Sagnac loop 185. In a preferred embodiment, regenerating signal input PM fiber and collimator 110 may preserve the polarization status of regenerating signal 102 as linear polarization. The XGM, XPM, and/or XPP modulation created above is transcribed onto regenerating signal 102 introduced by regenerating input PM fiber and collimator 110 within SOA 160. Output SMF fiber and collimator 115 enables regenerated signal 103 (output signal) to exit Sagnac loop 185, for example, into an external fiber pigtailed device (not shown).

External polarization controller 125 controls the polarization state outside of Sagnac loop 185. Internal polarization controller 135 controls the polarization of clockwise and counter-clockwise propagating light components within Sagnac loop 185. Preferably, both internal and external polarization controllers 135, 125 are mounted on internal and external TEC and thermistors 130, 120, respectively, which control the temperature of polarization controllers 135, 125 by measuring it during regular operation and locking on a target temperature.

Non-polarizing beam splitter 140 splits regenerating signal 102 into one counterclockwise portion and one clockwise portion, both portions circulating within Sagnac loop 185. In one embodiment, the beam splitter ratio of non-polarizing beam splitter 140 is 50%. However, other ratios may be used. Non-polarizing beam splitter 140 may also act as a polarization splitter, known as a Polarization Beam Splitter (PBS). Non-polarizing beam combiner 145 combines input signal 101 with regenerating signal components. In one embodiment, the mixing ratio of non-polarizing beam combiner 145 is 50%. However, other ratios may be used. For example, if more signal power is required, the ratio may be changed to 60%:40%, or any other value. Non-polarizing beam combiner 145 may also combine different polarization components.

First SOA arm 150 may be an SMF fiber, where the tip of the fiber contains a collimator. First SOA arm 150 collects and transmits the light that is combined by non-polarizing beam combiner 145 into SOA 120, and collects light from SOA 120 toward output SMF fiber 115. In one embodiment, first SOA arm 150 may move along its optical axis thereby setting a time delay within Sagnac loop 185, as disclosed in pending U.S. Patent Application serial number 10/623,280, filed July 18, 2003, entitled "ALL-OPTICAL, TUNABLE REGENERATOR, RESHAPER, AND WAVELENGTH CONVERTER," and hereby incorporated by reference. In other embodiments, delay may be achieved by introducing a material with a higher refraction characteristics (*e.g*., glass, liquid crystal, bi-refringent crystal, or the like) rather that by moving first SOA arm 150. Similarly, second SOA arm 155 may also be an SMF fiber, where the tip of the fiber contains a collimator. Second SOA arm 155 collects and transmits light out of SOA 120 towards output SMF fiber 115, and introduces the counter clockwise propagating CW into SOA 120. In this embodiment, second SOA arm 155 does not require translation along the optical axis.

Polarizer 165 may be a linear polarizer and is positioned at the output port in order to improve the extinction ratio of the output signal. Free space isolator 170 may be used to prevent reflections of light from returning into Sagnac loop 185 and affecting the performance of SOA 120. Input/output pins 175 connect to the voltage and control electronics of the internal components, such as TEC controllers 120, 130, and SOA 120. Finally, sealed package 180 maintains regenerator 100 closed and sealed from humidity and dirt effects.

It will be readily appreciated by one of ordinary skill in the art that various deviations from this exemplary embodiment fall within the spirit and scope of the present invention. For example, components 165 and 170 may be combined to a single component, which is commercially available, thereby reducing the total number of FSO parts. Further, one may integrate a PC controller with TEC control between non-polarizing beam splitter 140 and polarizer 165 in order to optimize performance. Moreover, a tunable filter (not shown) may be integrated into the package between free space isolator 170 and output SMF fiber and collimator 115. The tunable filter may prevent input signal 101 from leaving regenerator 100 at the output port, thereby keeping only the new regenerating signal within regenerator 100.

In addition, as one of ordinary skill in art will readily recognize in light of this disclosure, it is possible to automate the manufacturing process of regenerator 100 by placing FSO components on a mechanical stage utilizing automated manufacturing tools to achieve sub-micron accuracy, thereby substantially reducing production costs.

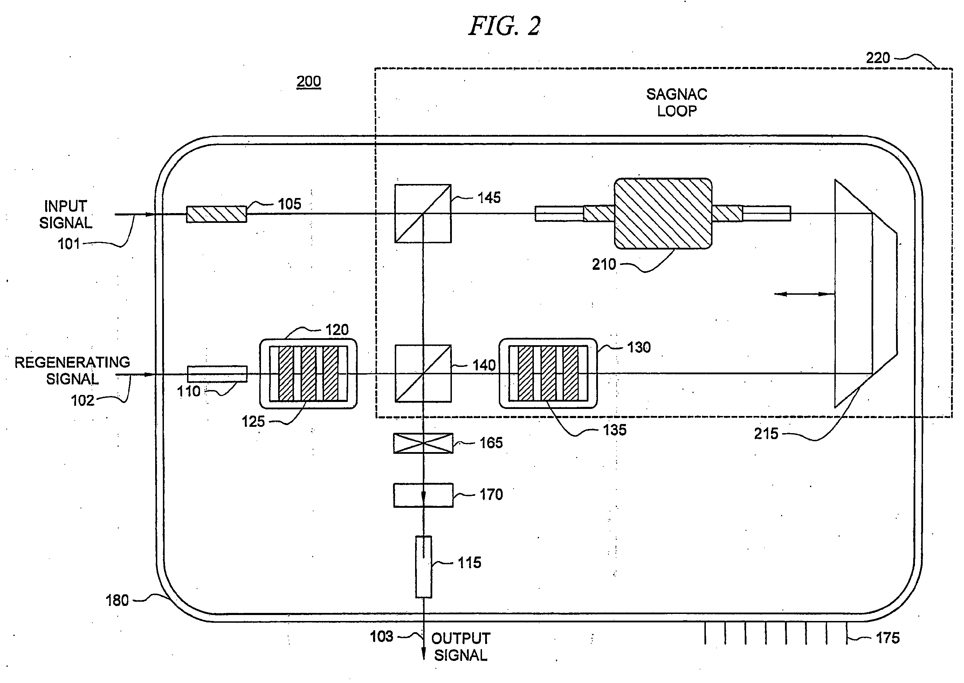

FIGURE 2 shows another all-optical signal regenerator 200 based on free space optics, according to an exemplary embodiment of the present invention. In this embodiment, SOA 210 is integrated with left and right SOA arms at its ports instead of fiber pigtails. This allows reduction in the size of package 180, and also improves the stability of regenerator 200 due to the reduction or elimination of optical fibers from its design.

The embodiment of FIGURE 2 also comprises prism 215, such as, for example, a Dove prism, which allows for right angle folding of the collimated light in order to create Sagnac loop 220. Prism 215 may also move along an optical axis in order to create the appropriate time delay between the two arms of Sagnac loop 220. As one of ordinary skill in the art will readily recognize in light of this disclosure, moving prism 215 along its axis does not change the path between the left SOA arm and non-polarizing beam splitter 140 (through non-polarizing beam combiner 145), but only the length between the right SOA arm and non-polarizing beam combiner 145 (through prism 215 and internal polarization controllers 135).

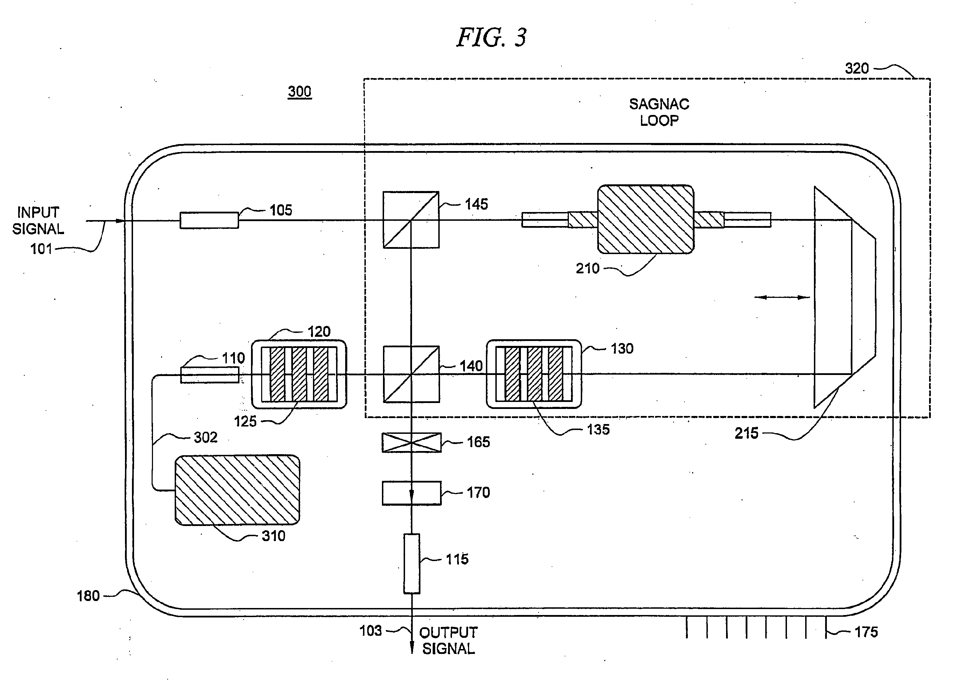

With respect to FIGURE 3, all-optical signal regenerator 300 based on free space optics with integrated continuous wave laser 310 is depicted, according to an exemplary embodiment of the invention. In this embodiment, regenerating laser 310 is integrated as part of package 180 and is coupled to the CW optical path through input PM fiber and collimator 110. Regenerating laser 310 may be a wavelength laser or a tunable laser of any kind. For example, in case of return-to-zero (RZ) transmission, regenerating laser 310 may be a source of pulses 302 such as those coming from an optical clock generator or pulse generator operating at any desired bit rate.

In an alternative embodiment, a variable optical attenuator (VOA) (not shown) may be integrated between laser 310 and input PM fiber and collimator 110 in order to control the required input regenerating signal power to Sagnac loop 320. Alternatively, if a VOA is not used, the power of laser 310 may be controlled by external electronics. One of the many advantages of regenerator 300 is the ability to eliminate the cumbersome package of an external regenerating laser and to use it in a simpler form within package 180, thereby reducing cost and size, and simplifying the integration of regeneration 300 onto a standard electronic card.

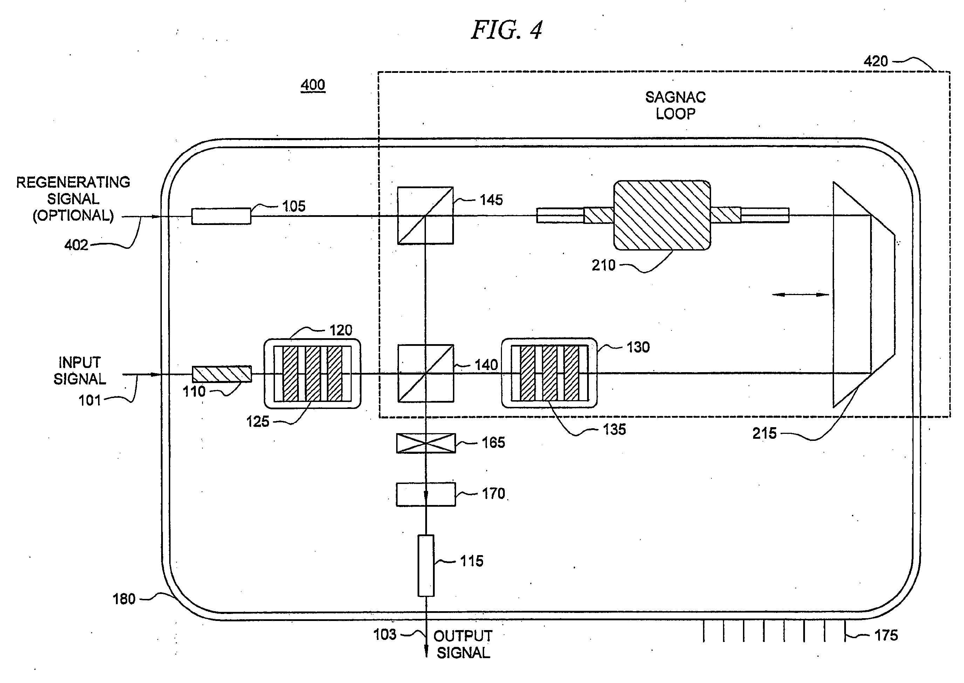

With respect to FIGURE 4, all-optical signal regenerator 400 based on free space optics operating in regeneration mode is depicted according to an exemplary embodiment of the invention. In regeneration mode, input signal 101 is injected directly into regenerating input PM fiber and collimator 110, and no regenerating signal is injected in parallel to regenerator 400. In this embodiment, regenerator 400 may significantly improve the extinction ratio of the input signal 101, and also reduce noise and impairments existing on the original signal. One of the many advantages of this embodiment is that it eliminates the need for a regenerating signal laser.

In an alternative embodiment, a low saturation power SOA 210 is used. In this case, it may be beneficial to inject optional regenerating laser 402 into SMF and collimator 105 and in parallel to input signal 101 regeneration performed through regenerating input PM fiber and collimator 110. Optional regenerating laser 402 may help balance gain variations within SOA 210 while it operates within Sagnac loop 420, thereby eliminating peaking effects and distortion of the signal due to non-linearities in SOA 120. Optional regenerating signal 402 at SMF and collimator 105 may be an idler signal of arbitrary wavelength.

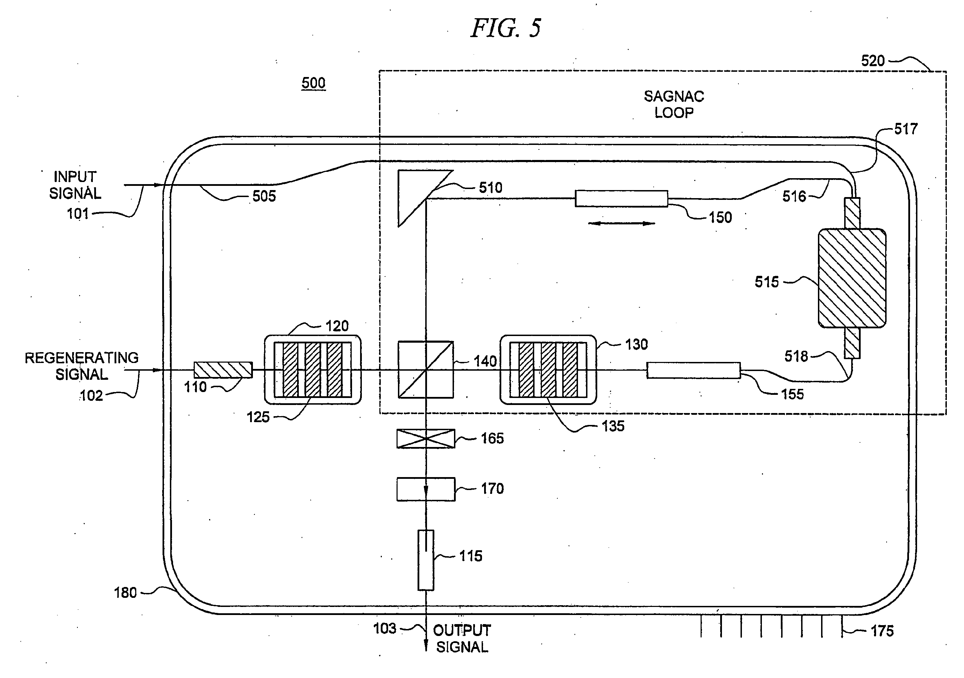

With respect to FIGURE 5, all-optical signal regenerator 500 based on free space optics with an integrated multi-mode interference component is depicted according to an exemplary embodiment of the invention. Proper operation of a regenerator typically requires that the wavelength of the input signal be different from that of the regenerating signal so that the two may be distinguished at the output of the device. Regenerator 500 solves this problem by integrating the SOA with a multi-mode interferometer (MMI). Generally, an MMI is a device capable of converting the mode of an input signal. For example, an MMI may take two different signals at two different input ports and add them together to a single exit port, where each may have a different transversal mode.

Accordingly, regenerator 500 utilizes SOA integrated with a multi-mode interference coupler (SOA/MMI) 515. Input fiber 505 connects input signal 101 directly to first input port 517 of SOA/MMI 515. Second input port 516 may be pigtailed with a fiber and collimator and maintains regeneration light circulating within Sagnac loop 520 in zero order mode. Corner reflecting prism 510 reflects regeneration light within Sagnac loop 520. In one exemplary embodiment, corner reflecting prism 510 provides total reflection of the regenerating signal, thereby reducing the power requirements for regenerating signal 102 and input signal 101.

In one embodiment, MMI/SOA 515 may be similar to the one disclosed in U.S. Patent No. 5,933,554, issued on August 3, 1999, entitled "COMPACT OPTICAL-OPTICAL SWITCHES AND WAVELENGTH CONVERTERS BY MEANS OF MULTIMODE INTERFERENCE MODE CONVERTERS," and hereby incorporated by reference. An MMI may be a device based on an InP waveguide (not shown) that has 2 input ports and 2 output ports. The InP waveguide is designed so that a zero order mode laser light that enters in port 516 remains in zeroth mode at output port 518. Hence, this embodiment may provide a selective filter that prevents input signal 101 from circulating in Sagnac loop 520, thereby letting only regenerating light to circulate and interfere to create signal output. Furthermore, the MMI allows input signal 101 and regenerating signal 102 to be in the same wavelength without interfering in Sagnac loop 520.

Moreover, the input signal to MMI/SOA 515, which itself comprises two signals (the first being input signal 101 at the first transverse mode and the second being regenerating signal 102 at the second transverse mode), enters the SOA portion of MMI/SOA 515 in which a cross-gain process takes place. When the cross-gain signal exits the SOA and is coupled to a single mode fiber of output port 518, only the first-mode (zero order) signal can enter fiber 518. Thus, these two signals 101 and 102 may be distinguished even if they have the same wavelength, and having the MMI/SOA 515 to the single mode fiber of output port 518 provides a transversal mode filter, thus replaces a spectral filter.

An advantage of this exemplary embodiment is that it allows for input signal 101 and regenerating signal 102 to have the same exact wavelength, since these two signals are not in the same spatial mode when entering SOA 515. This allows regenerator 500 to regenerate a signal without the need to change its wavelength. Further, this embodiment may also block input signal 101 from leaving regenerator 500 without the use of optical filters such as, for example, a fixed wavelength or tunable filter at the output port of regenerator 500.

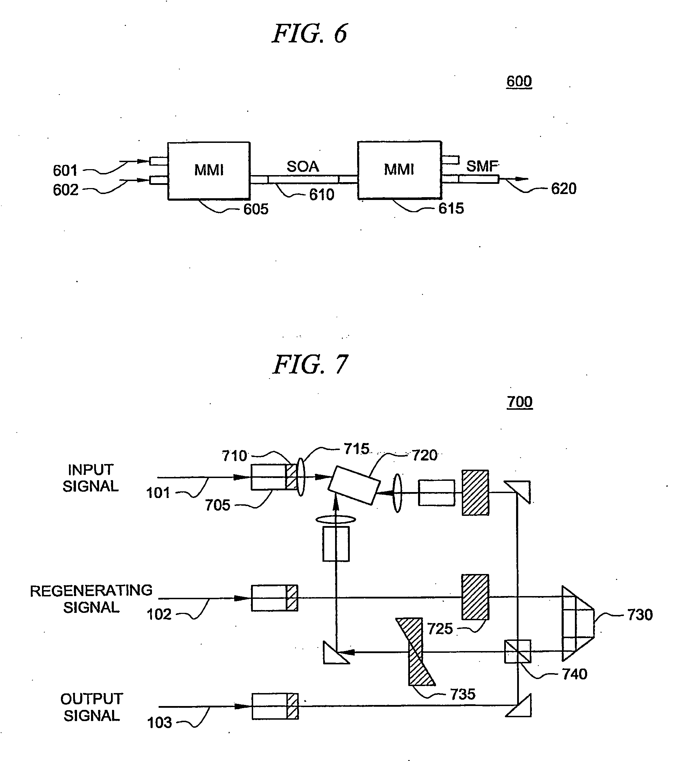

Turning to FIGURE 6, a block diagram of a double multi-mode interference component integrated with a semiconductor optical amplifier is depicted according to one embodiment of the present invention. The double MMI+SOA apparatus may be used, for example, in some of the embodiments described above as follows. First MMI 605 may receive two input signals 601 and 602 (e.g., input signal 101 and regenerating signal 102 described above). The output of first MMI 605 is coupled to the input SOA 610, which adds signals 601 and 602 together. The output of SOA 610 is coupled to the input of second MMI 615, which then separates signals 601 and 602. The output of MMI 615 is coupled to output single mode fiber 620. One advantage of using this particular arrangement in some of the embodiments described herein is that it does not require delicate coupling calibration at the output fiber. Otherwise, if SOA 610 were directly coupled to output single mode fiber 620, the latter would have to be aligned with high precision so that there would be no coupling between it and the high mode in SOA 610. Second MMI 615 eliminates this problem because at one of its inputs only the zero-order can propagate.

With respect to FIGURE 7, another all-optical signal regenerator 700 based on free space optics with an integrated multi-mode interference component is depicted according to one embodiment of the present invention. Input signal 101 enters a Sagnac loop via a first input of integrated MMI/SOA 720 after passing through Risley cell 705 coupled to isolator 710 and lens 715. Meanwhile, regenerating signal 102 enters the Sagnac loop via a second input of MMI/SOA 720 after passing through another Risley cell 705 coupled to another isolator 710, a polarization controller 735, and dove prism 730. Tuning wedge 735 allows a time delay to be set within the Sagnac loop. Alternatively, any suitable free-space optics time delay mechanism may be used.

In this embodiment, since the SOA and MMI are integrated on the same chip, they are coupled to regenerator 700 via three (rather than two) lenses. Moreover, in this configuration, a single beam splitter 740 is needed. Beam direction may be controlled by Risley cells 705, which also couple the external fibers (carrying signals 101-103) to free-space regenerator 700. Dove prism 730 may be used to keep all the external ports on one end of regenerator 700, but is not essential to its proper operation. In one embodiment, due to the small dimensions of the chip that includes the MMI/SOA 700, it is more convenient that each input port be at a separate face of the chip.

Although certain embodiments of the present invention and their advantages have been described herein in detail, it should be understood that various changes, substitutions and alterations can be made without departing from the spirit and scope of the invention as defined by the appended claims. Moreover, the scope of the present invention is not intended to be limited to the particular embodiments of the process, machine, manufacture, means, methods, and steps described herein. As a person of ordinary skill in the art will readily appreciate from this disclosure, other processes, machines, manufacture, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, means, methods, or steps.

## Claims

1. A method for regenerating an optical signal comprising:
counter-propagating an input signal and a regenerating signal within an all-optical signal regenerator based on free space optics, where the all-optical signal regenerator based on free space optics comprises a Sagnac loop interferometer; and
extracting a regenerated output signal from the Sagnac loop interferometer.

2. The method of claim 1, further comprising setting a delay within the Sagnac loop interferometer.

3. The method of claim 1, where the counter-propagating is performed within a semiconductor optical amplifier.

4. The method of claim 1, where the counter-propagating is performed within a semiconductor optical amplifier integrated with a multi-mode interference coupler.

5. An all-optical signal regenerator based on free space optics comprising:
a Sagnac loop interferometer;
an optical signal input path coupled to a semiconductor optical amplifier of the Sagnac loop interferometer;
a regenerating optical signal path coupled to the semiconductor optical amplifier of the Sagnac loop interferometer; and
a regenerated optical output path coupled to the Sagnac loop interferometer.

6. The regenerator of claim 5, where the optical signal input path comprises a first single-mode optical fiber and collimator operable to receive an input optical signal.

7. The regenerator of claim 6, where the optical signal input path further comprises a non-polarizing beam combiner coupled to the single-mode optical fiber and collimator.

8. The regenerator of claim 7, where the optical signal input path further comprises a first semiconductor optical amplifier arm coupled to the non-polarizing beam combiner and to the semiconductor optical amplifier.

9. The regenerator of claim 8, where the first semiconductor optical amplifier arm is operable to set a time delay by moving along an optical axis.

10. The regenerator of claim 8, where the path comprises a regenerating input polarization maintaining fiber and collimator operable to receive a regenerating optical signal.

11. The regenerator of claim 10, where the regenerating optical signal path further comprises an external thermoelectric cooler and thermistor coupled to the regenerating input polarization maintaining fiber and collimator.

12. The regenerator of claim 11, where the regenerating optical signal path further comprises a non-polarizing beam splitter coupled to the external thermoelectric cooler and thermistor and to the non-polarizing beam combiner.

13. The regenerator of claim 12, where the regenerating optical signal path further comprises an internal thermoelectric cooler and thermistor coupled to the non-polarizing beam splitter.

14. The regenerator of claim 13, where the regenerating optical signal path further comprises a second semiconductor optical amplifier arm coupled to the internal thermoelectric cooler and thermistor and to the semiconductor optical amplifier.

15. The regenerator of claim 14, where the regenerated output optical path comprises a polarizer coupled to the non-polarizing beam splitter.

16. The regenerator of claim 15, where the regenerated output optical path further comprises a free space isolator coupled to the polarizer.

17. The regenerator of claim 16, where the regenerated output optical path further comprises an output single-mode optical fiber and collimator coupled to the free space isolator.

18. The regenerator of claim 17, where the regenerated output optical path further comprises a tunable filter coupled to the free space isolator and to the output single-mode optical fiber and collimator.

19. The regenerator of claim 5, where the Sagnac loop interferometer comprises a prism operable to set a time delay by moving along an optical axis.

20. The regenerator of claim 5, further comprising an integrated regenerating laser coupled to the regenerating optical signal path.

21. The regenerator of claim 20, where the integrated regenerating laser is a tunable laser.

22. The regenerator of claim 20, further comprising a variable optical attenuator coupled to the integrated regenerating laser.

23. The regenerator of claim 5, where the semiconductor optical amplifier comprises a multi-mode interference coupler.

24. An all-optical signal regenerator based on free space optics comprising:
a Sagnac loop interferometer;
a regenerating optical signal path coupled to a semiconductor optical amplifier, where the regenerating optical signal path is operable to receive an input optical signal to be regenerated; and
a regenerated output optical path coupled to the Sagnac loop interferometer.

25. The all-optical signal regenerator based on free space optics of claim 24 further comprising an optical signal input path coupled to the semiconductor optical amplifier, where the optical signal input path is operable to receive an optional regenerating optical signal.
